# EUROPEAN PATENT APPLICATION

(11) **EP 2 390 509 A2**
(43) Date of publication of application: **30.11.2011**
(21) Application number: 11167202.8
(22) Date of filing: 24.05.2011
(51) Int. Cl.: F04D 13/06, F04D 29/02, F04D 29/22, F04D 29/62

(54) **Resin injection molded rotary member**

(30) Priority: 28.05.2010 JP 2010122882
(71) Applicant: AISIN SEIKI KABUSHIKI KAISHA, Kariya-shi, Aichi 448-8650 (JP)
(72) Inventor: Ishiguro, Motohisa, Kariya-shi Aichi 448-8650 (JP)
(74) Representative: Kramer - Barske - Schmidtchen

(57) **Abstract**

A resin injection molded rotary member (X) having an insertion hole (40) into which a shaft member (Y) is inserted, the resin injection molded rotary member (X) rotating integrally with the shaft member (Y) inserted in the insertion hole (40) or rotating relative to the shaft member (Y), includes a central rotation axis (Z), first and second shaft support portions (41 a, 41 b) positioned at respective end portions in a direction of the central rotation axis (Z) to be in contact with the shaft member (Y), and an intermediate portion (41 c) arranged between the first and second shaft support portions (41 a, 41 b), the resin injection molded rotary member (X) including a thickness defined between outer and inner surfaces in one of radially outward directions from the central rotation axis (Z), the thickness of the resin injection molded rotary member (X) being configured so that a thickness of the intermediate portion (41 c) is smallest at a position adjacent to the first shaft support portion (41 a) or the second shaft support portion (41 b).

## Description

### TECHNICAL FIELD

This disclosure generally relates to a resin injection molded rotary member.

### BACKGROUND DISCUSSION

A number of motors each serving as an electric rotary actuator are arranged in various apparatuses. In a case where each motor is applied to a vehicle, the motor is utilized to drive an oil pump, a water pump, a power steering device, a seat, a door, and the like.

A rotor unit constituting a portion of the motor includes a rotor and an impeller arranged at one end of the rotor in a direction of a central rotation axis of the rotor. The rotor includes a yoke formed in a cylindrical column having a shaft insertion hole at the center, and a magnet arranged in the yoke along the shaft insertion hole. A shaft member is inserted in the shaft insertion hole of the rotor. A shaft support portion supporting the shaft member is formed at an inner circumferential surface of the shaft insertion hole.

A known centrifugal pump disclosed in JP2007-120373A (hereinafter referred to as Reference 1) includes a rotor and a shaft support portion integrally formed with each other by insert molding. In addition, a known axial-flow pump disclosed in JP2003-056488A (hereinafter referred to as Reference 2) includes a rotor, a shaft member, and a shaft support portion that supports the shaft member. The shaft support portion is at least formed by a resin material serving as a slide member.

According to each of the rotors described in References 1 and 2, the shaft member is inserted in the shaft support portion so as to penetrate therethrough along an axial direction of the shaft member in a state where an approximately entire area of an inner circumferential surface of the shaft support portion is in contact with an outer circumferential surface of the shaft member. Thus, the shaft member is supported by the inner circumferential surface of the shaft support portion in a substantially entire axial length of the shaft support portion; thereby, vibrations or the like of the shaft member when the rotor rotates are minimized.

However, for example, in a case where a nonuniform shape having a convex portion or the like is generated at the inner circumferential surface of the shaft support portion of the rotor according to each of References 1 and 2, the convex portion makes contact with the shaft member. Accordingly, one end of the shaft support portion in the axial direction of the shaft member may not be surely in contact with the shaft member. As a result, a central rotation axis of the shaft member is not aligned with a central axis of a shaft member insertion hole, therefore deteriorating the rotational accuracy of the rotor.

In addition, for example, in a case where an elongated through-hole serving as the shaft member insertion hole is molded by resin injection molding, the elongated through-hole may be locally deformed due to different cooling conditions or the like of portions of the elongated through-hole. Moreover, for example, the elongate through-hole is machined in order to remove the deformation, therefore increasing man hours for manufacturing the rotor. As a result, the cost of the motor increases.

A need thus exists for a resin injection molded rotary member, which simply enables a central rotation axis of a shaft member to be aligned with a central axis of a shaft member insertion hole.

### SUMMARY

According to another aspect of this disclosure, a resin injection molded rotary member having an insertion hole into which a shaft member is inserted, the resin injection molded rotary member rotating integrally with the shaft member inserted in the insertion hole or rotating relative to the shaft member, includes a central rotation axis, first and second shaft support portions positioned at respective end portions in a direction of the central rotation axis to be in contact with the shaft member, and an intermediate portion arranged between the first and second shaft support portions. The resin injection molded rotary member includes a thickness defined between outer and inner surfaces in one of radially outward directions from the central rotation axis, the thickness of the resin injection molded rotary member being configured so that a thickness of the intermediate portion is smallest at a position adjacent to the first shaft support portion or the second shaft support portion.

For example, in a case where the rotary member is molded by injection molding by means of a thermosetting resin material, the volume of the thermosetting resin material decreases in process of hardening, i.e. shrinkage occurs within the thermosetting resin material. The amount of shrinkage of the resin material occurring at the intermediate portion between the first and second shaft support portions is larger than the amount of shrinkage of the resin material occurring at each of the first and second shaft support portions. The amount of shrinkage of the thermosetting resin material in process of hardening depends on the volume of the thermosetting resin material. In other words, a large volume of the thermosetting resin material needs to be injected into the intermediate portion in order to increase the amount of shrinkage of the thermosetting resin material at the intermediate portion. It is desirable for the shaft member to be not in contact with the intermediate portion over the entire axial length in order that the rotary member may be appropriately or precisely aligned with the shaft member so as to be supported thereby. Accordingly, a radius of the rotary member, which is located at a midsection of the intermediate portion in the direction of the central rotation axis is larger than a radius of the rotary member, which is at any position other than the midsection of the intermediate portion in the direction of the central rotation axis. The rotary member configured as described above allows the intermediate portion to be shrunk in the entire axial length. Consequently, the rotary member is surely supported by the first and second shaft support portions relative to the shaft member and is maintained so as to be coaxial therewith.

The intermediate portion may be molded by the resin material so as to have a large inner diameter due to hardening properties of the resin material. After the resin material is injected in a mold, a portion of the resin material, which in contact with the mold firstly starts hardening. According to the rotary member of the disclosure, an outer surface of the resin material injected in the mold firstly starts hardening. A certain amount of shrinkage occurs within the resin material in process of hardening. Accordingly, an inner surface of the resin material hardens slowly compared to the outer surface of the resin material that has already hardened. Consequently, the inner surface of the resin material is restricted by the outer surface of the resin material and is thereby recessed radially outward from the central rotation axis. As a result, the rotary member is configured to have the intermediate portion having the large inner diameter compared to inner diameters of the first and second shaft support portions.

As described above, the injection volume of the resin material in a predetermined region of the mold is adjusted to thereby limit the generation of shrinkage of the resin material. As a result, the central rotation axis of the rotary member is aligned with a central axis of the shaft member. In addition, the rotary member surely supported by the first and second shaft support portions may be obtained.

According to another aspect of the disclosure, the intermediate portion includes a noncontact portion not being in contact with the shaft member in a state where the shaft member is inserted in the insertion hole.

According to still another aspect of the disclosure, a portion in which the thickness of the intermediate portion is largest is arranged at any position other than ends of the intermediate portion in the direction of the central rotation axis.

Thus, the intermediate portion is molded so as to have the largest thickness defined approximately at the midsection; thereby, the resin material may be shrunk mainly in the vicinity of a substantially intermediate section of the rotary member in the axial direction of the shaft member. Accordingly, for example, in a state where the shaft member is inserted in the rotary member so as to penetrate therethrough, the rotary member is surely prevented from being in contact with the shaft member between the first and second shaft support portions. Consequently, the rotational accuracy of the rotary member may increase.

According to further aspect of the disclosure, the resin injection molded rotary member further includes a rotor portion for a motor, an impeller portion integrally rotating with the rotor portion, and a shaft portion connecting the rotor portion to the impeller portion, wherein at least the shaft portion is configured to include the intermediate portion.

As described above, according to the rotary member of the disclosure, the large volume of the resin material needs to be injected in the portion of the mold, at which the intermediate portion is molded, or in the midsection of the intermediate portion. The shaft portion connects the rotor portion including magnets and the like, to the impeller portion. Further, an outer shape of the shaft portion may be formed according to need; therefore, the outer shape of the shaft portion may be easily molded into a spindle shape or the like so that the amount of shrinkage of the resin material may be adjusted. In addition, the shaft portion is configured to include the intermediate potion corresponding to the intermediate portion of the rotary member in the axial direction. Further, a large amount of shrinkage of the resin material may be generated at the intermediate portion of the rotary member. As a result, the rotational accuracy of the rotary member may increase.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a perspective schematic view of a rotary member according to an embodiment of this disclosure;

Fig. 2 is a cross-sectional view of the rotary member according to the embodiment of the disclosure; and

Fig. 3 is a schematic view illustrating a manufacturing process of the rotary member according to the embodiment of the disclosure.

### DETAILED DESCRIPTION

An embodiment of this disclosure will be explained with reference to illustrations of the attached drawings as follows. A resin injection molded rotary member (rotary member) according to the embodiment of the disclosure includes a shaft member insertion hole into which a shaft member is inserted. The resin injection molded rotary member will be hereinafter referred to as the rotary member. The rotary member integrally rotates with the shaft member inserted into the rotary shaft member insertion hole or rotates relative to the shaft member. In the embodiment, for example, a rotor unit for an inner-rotor motor utilized in a water pump for a vehicle is described. The rotor unit serves as a rotary member X integrally rotating with a shaft member Y. An impeller (serving as an impeller portion 20 in the embodiment) for the water pump is integrated with the rotor unit.

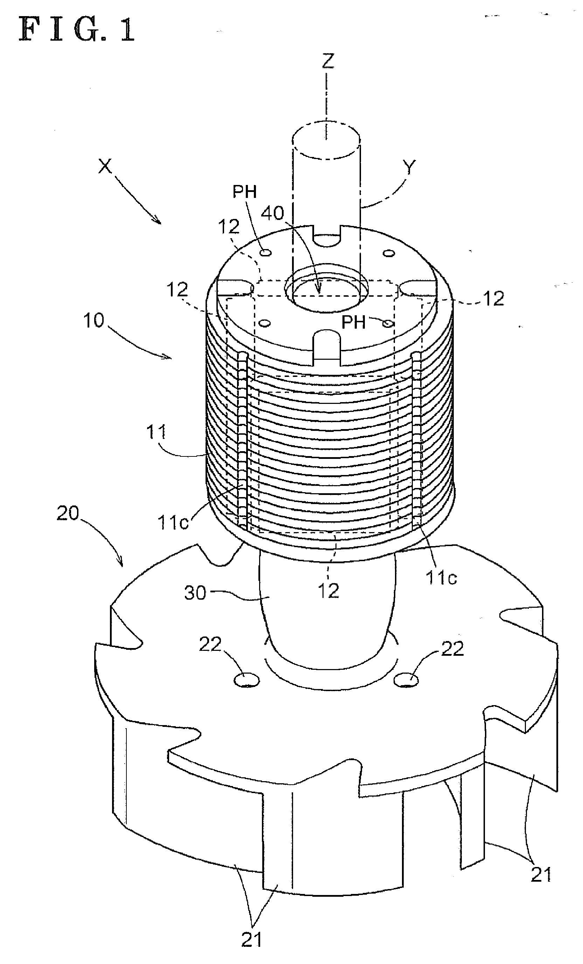

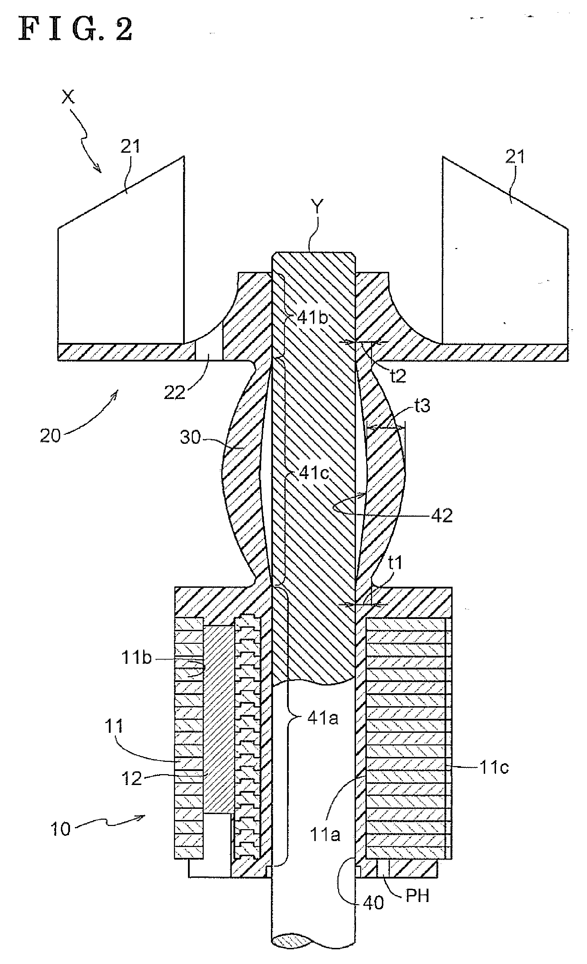

As illustrated in Figs. 1 and 2, the rotary member X according to the embodiment includes a rotor portion 10, the impeller portion 20 integrally rotating with the rotor portion 10, a shaft portion 30, and a shaft member insertion hole 40 serving as an insertion hole. The rotor portion 10 includes a yoke 11 and magnets 12 such as permanent magnets. The rotor portion 10 and the impeller portion 20 are connected to each other by the shaft portion 30. In particular, the rotor portion 10, the impeller portion 20, and the shaft portion 30 are integrally molded with one another by means of a resin material. For example, a material in which glass fiber (GF) is mixed with Poly Phenylene Sulfide (PPS) is applied to the resin material. The Poly Phenylene Sulfide (PPS) is a flame-retarded resin having high heat resistance and high rigidity. The GF may account for approximately fifteen to forty five percent in the mixed resin material of the PPS and GF; however, a different compounding ratio of the mixed resin material of the PPS and GF is applicable. The compounding ratio of the mixed resin material in process of hardening is varied; thereby, the amount of shrinkage of the mixed resin material may be varied (the mixed resin material will be referred to as the resin material below).

Annular plates in which through-holes such as a central through-hole 11a, magnet insertion holes 11 b, and the like are formed are layered to be formed into a cylindrical column and the shaft member insertion hole 40 extending in an axial direction of the shaft member Y is formed at a position further radially inward than the central through-hole 11 a; thereby, the yoke 11 is configured. The magnets 12 having flat plate shapes are inserted in the magnet insertion holes 11 b, respectively.

The impeller portion 20 is arranged at one end of the rotor portion 10 in the axial direction of the shaft member Y in a condition where the shaft portion 30 having an outer diameter smaller than an outer diameter of the rotor portion 10 is positioned between the rotor portion 10 and the impeller portion 20 in the axial direction of the shaft member Y. The impeller portion 20 integrally rotates with the rotor portion 10 and includes blades 21 acting on water in the water pump. Pressure balancing bores 22 and the like are arranged at the impeller portion 20.

The resin material is injected in a mold M to thereby form the shaft member insertion hole 40 at the position further radially inward than the central through-hole 11a. The shaft member insertion hole 40 is formed on a central rotation axis Z of the rotary member X so as to extend from the rotor portion 10 through the shaft portion 30 to the impeller portion 20. The shaft member Y is inserted in the shaft member insertion hole 40. First and second shaft support portions 41 a and 41 b are formed at end portions of the rotary member X (ends of the insertion hole 40), respectively, in the axial direction of the shaft member Y. In a state where the shaft member Y is inserted in the shaft member insertion hole 40, the shaft member Y is in contact with the first and second shaft support portions 41 a and 41 b only. That is, in the aforementioned state where the shaft member Y is inserted in the shaft member insertion hole 40, the shaft member Y is not in contact with an inner surface of the shaft portion 30, which is formed as an intermediate portion 41 c included in the rotary member X and arranged between the first and second shaft support portions 41 a and 41 b in the axial direction of the shaft member Y.

In the embodiment, the first shaft support portion 41a is formed at a portion of the shaft member insertion hole 40, which is surrounded by the rotor portion 10 from a radially outward side of the shaft member insertion hole 40. The second shaft support portion 41 b is formed at a portion of the shaft member insertion hole 40, which is surrounded by the impeller portion 20 from the radially outward side of the shaft member insertion hole 40. The intermediate portion 41 c is formed between the first and second shaft support portions 41 a and 41 b in the axial direction of the shaft member Y.

According to the embodiment, the rotary member X has a wall thickness defined between outer and inner surfaces in one of radially outward directions from the central rotation axis Z. In particular, the wall thickness of the rotary member X is configured so that the intermediate portion 41c includes a first wall thickness t1 in a boundary portion between the first shaft support portion 41 a and the intermediate portion 41 c, a second wall thickness t2 in a boundary portion between the second shaft support portion 41 b and the intermediate portion 41 c, and a third wall thickness t3. The third wall thickness t3 is defined at any portion other than ends of the intermediate portion 41 c in the axial direction of the shaft member Y so as to be equal to or larger than the first wall thickness t1 or the second wall thickness t2, whichever is smaller. According to the embodiment, the first wall thickness t1 and the second wall thickness t2 are designed to be approximately equal to each other but may be not be equal to each other.

According to the embodiment, the first shaft support portion 41 a and the second shaft support portion 41 b that support the shaft member Y are formed at the end portions of the rotary member X in the axial direction of the shaft member Y in order to align the central rotation axis Z of the rotary member X with a central axis of the shaft member insertion hole 40. In addition, in order for the resin material to be surely shrunk at the intermediate portion 41 c, an outer shape of a midsection of the intermediate portion 41 c in the axial direction is formed so as to have a spindle shape and a wall thickness of the midsection of the intermediate portion 41c is designed to be larger than wall thicknesses of the ends of the intermediate portion 41 c in the axial direction. That is, a radius of the rotary member X, which is located at the midsection of the intermediate portion 41 c in a direction of the central rotation axis Z is larger than a radius of the rotary member X, which is at any position other than the midsection of the intermediate portion 41 c in the direction of the central rotation axis (Z).

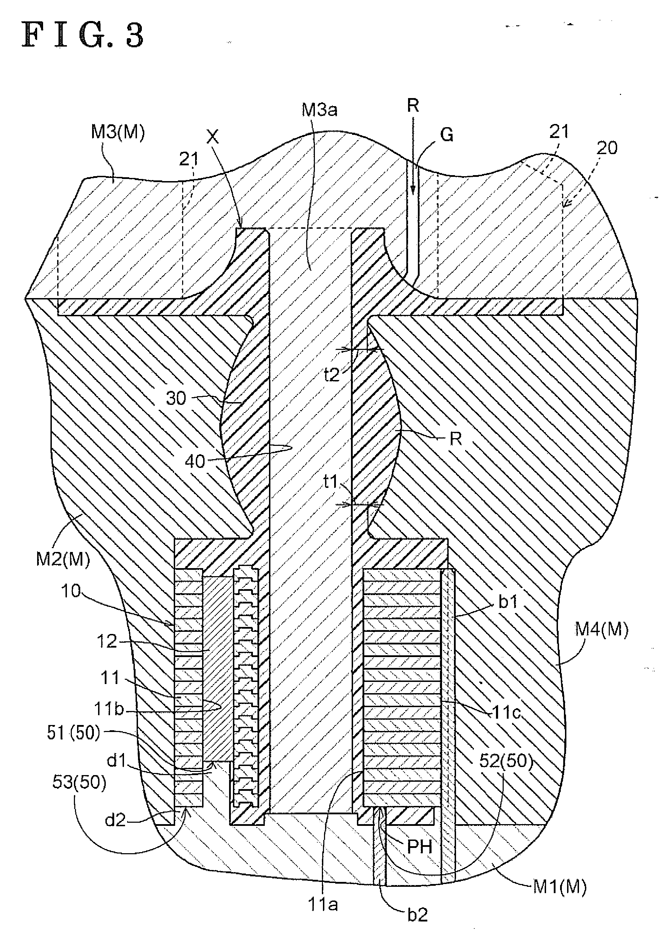

As illustrated in Fig. 3, portions of the resin material, which are in contact with a plurality of injection molds M1, M2, M3, and M4 utilized for injection-molding the rotary member X, tend to firstly start hardening (the injection molds M1, M2, M3, and M4 are included in the mold M). An outer surface of the rotary member X molded by the resin material tends to be cooled faster than a portion positioned adjacent to the shaft member insertion portion 40 in a contact manner with a core M3a, which constitutes a portion of the injection mold M3. That is, the outer surface of the rotary member X has a high curing rate than a curing rate of the portion positioned adjacent to the shaft member insertion portion 40. In particular, an outer surface of the shaft portion 30 molded by the resin material injected in the mold M firstly starts hardening. Then, a shrinkage portion 42 serving as a noncontact portion is surely generated at a portion of the molded shaft portion 30, which is positioned adjacent to the shaft member insertion portion 40, and which hardens slowly compared to the outer surface of the molded shaft portion 30 of the resin material. In other words, the shrinkage portion 42 is generated at the shaft member insertion hole 40 so as to be recessed toward a radially outward direction of the shaft member insertion hole 40.

Thus, the shrinkage portion 42 is formed to be recessed toward the radially outward direction of the shaft member insertion hole 40; thereby a concave portion is surely prevented from being formed at an inner surface of the shaft member insertion hole 40. Accordingly, the shaft member Y may be surely supported coaxially with the central axis of the shaft member insertion hole 40 by the first shaft support portion 41 a and the second shaft support portion 41 b positioned at the respective end portions of the rotary member X in the axial direction of the shaft member Y. Consequently, the central rotation axis Z of the shaft member Y and the central axis of the shaft member insertion hole 40 are surely aligned with each other, thereby minimizing vibration and the like of the shaft member Y when the rotary member X rotates.

In particular, the resin material is injected in the intermediate portion 41 c by a large volume compared to a volume of the resin material to be injected in the boundary portion between the first shaft support portion 41 a and the intermediate portion 41 c and compared to a volume of the resin material to be injected in the boundary portion between the second shaft support portion 41 b and the intermediate portion 41 c. The injection volume of the intermediate portion 41c is large, therefore slowing a cooling rate of the intermediate portion 41c of the resin material. As a result, the amount of shrinkage of the resin material at the intermediate portion 41 c increases compared to the aforementioned boundary portions where the injection volume of the resin material is smaller than the injection volume of the resin material in the intermediate portion 41 c.

The larger the volume of the resin material to be injected in the intermediate portion 41c is compared to the volume of the resin material to be injected in the first shaft support portion 41 a and the second shaft support portion 41 b located at the respective ends of the intermediate portion 41c, the larger the amount of shrinkage of the resin material at the intermediate portion 41 c increases after the resin material hardens. As a result, the shaft member Y is surely prevented from being in contact with the intermediate portion 41 c.

According to the embodiment, the intermediate portion 41c is arranged at the shaft member insertion hole 40 so as to correspond to a position at which the shaft portion 30 is formed. As described above, according to the embodiment, a large volume of the resin material needs to be injected in a region of the mold M, at which the intermediate portion 41 c is molded; however, a shape of the shaft portion 30 may be designed according to need. As a result, an injection manner of the resin material may be set arbitrarily.

<Method to manufacture the rotary member> The resin injection molded rotary member X according to the embodiment is manufactured, for example, by means of the mold M including the plurality of injection molds M1, M2, M3, and M4 as illustrated in Fig. 3.

The mold M is divided into the injection molds M1, M2, M3, and M4. A shape of a cavity formed by clamping the injection molds M1, M2, M3, and M4 to one another is formed so that the intermediate portion 41 c positioned between the first shaft support portion 41 a and the second shaft support portion 41 b has the wall thickness in which either one of the first wall thickness t1 adjacent to the first shaft support portion 41 a and the second wall thickness t2 adjacent to the second shaft support portion 41 b is smallest. Alternatively, according to the rotary member X of the embodiment, the mold M is configured so that the first wall thickness t1 and the second wall thickness t2 may be approximately equal to each other.

As described above, the mold M is divided into the injection molds M1, M2, M3, and M4 in vertical and horizontal directions as seen in Fig. 3. A melting resin material R (serving as the aforementioned resin material) is injected in the cavity from a gate G, which is formed in the injection mold M3, in a state where the core M3a molding the shaft member insertion hole 40 is positioned between the injection molds M2 and M3 so as to extend in a vertical direction as seen in Fig. 3 toward the injection mold M1. As a result, the rotary member X where the rotor portion 10, the impeller portion 20, and the shaft portion 30 are integrally formed with one another is molded by the melting resin material R (a resin injection process).

As described above, the yoke 11 is formed by the annular plates having the through-holes. Pin bores 11 c are formed in an outer circumferential side of the yoke 11 along the axial direction of the shaft member Y so as to support the outer circumferential side of the yoke 11 (see Fig. 1). The yoke 11 inserted in the mold M is supported by pins b1 inserted in the respective pin bores 11c along the axial direction. At this time, the injection mold M1 contacts a pressed portion 50, which is located at a lower side of the yoke 11 and the magnets 12 in Fig. 3 so as to be pressed against the yoke 11 and the magnets 12, thereby supporting the yoke 11 and the magnets 12. As shown in Fig. 3, the pressed portion 50 includes a first pressed portion 51, a second pressed portion 52, and a third pressed portion 53.

The first pressed portion 51 is supported by a first support portion d1 arranged at the injection mold M1. The first support portion d1 supports the magnet 12 inserted in the magnet insertion hole 11b; thereby, the magnet 12 may be precisely positioned when injection-molding the rotary member X by the melting resin material R. The second pressed portion 52 is supported by a pin b2 inserted in each of pin through-holes PH formed in the injection mold M1. The third pressed portion 53 having an annular shape and arranged substantially along an outer circumferential side of the yoke 11 is supported by an annular support portion d2 of the injection mold M1 while being in contact with the annular support portion d2 in the vertical direction seen in Fig. 3.

An outer surface of the melting resin material R injected in the mold M is cooled so as to preferentially harden in order to generate the shrinkage portion 42 at the shaft member insertion hole 40 as described in the embodiment (a resin hardening process). Such resin hardening process is performed, for example, by sending air at a predetermined temperature in a state where the melting resin material R is filled in the mold M and by other methods.

Thus, for example, the outer surface of the melting resin material R injected in the mold M and molding the shaft portion 30 firstly starts hardening. Then, the shrinkage portion 42 is surely formed at the portion of the molded shaft portion 30 positioned adjacent to the shaft member insertion hole 40 and hardening slowly compared to the outer surface of the molded shaft portion 30.

The yoke 11 and the magnets 12 are maintained at predetermined positions by the pins b1, the pins b2, the support portions d1, and the annular support portion d2 against a pressure of the melting resin material R. Accordingly, the yoke 11 and the magnets 12 may not be dislocated from the predetermined positions even after the melting resin material R hardens. As a result, the rotary member X may be precisely molded so that the rotor portion 10, the impeller portion 20, and the shaft portion 30 are integrally formed with one another.

The pins b2 supporting the second pressed portions 52, respectively, serve as extrusion pins (extrusion members) that are extrudable and retractable into and from the mold M. In a condition where the rotary member X is being molded by the melting resin material R, the pins b2 are in the respective retracted positions to support the yoke 11. After the rotary member X is molded, the pins b2 are extruded or protruded in the mold M toward the impeller portion 20; thereby, the resin injection molded rotary member X is extruded from the mold M (a rotary member extrusion process).

The resin injection molded rotary member X according to the embodiment of the disclosure may be utilized to the rotor unit for the inner-rotor motor or the like.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A resin injection molded rotary member (X) including an insertion hole (40) into which a shaft member (Y) is inserted, the resin injection molded rotary member (X) rotating integrally with the shaft member (Y) inserted in the insertion hole (40) or rotating relative to the shaft member (Y), comprising:
a central rotation axis (Z);
first and second shaft support portions (41 a, 41 b) positioned at respective end portions in a direction of the central rotation axis (Z) to be in contact with the shaft member (Y); and
an intermediate portion (41c) arranged between the first and second shaft support portions (41 a, 41 b),
the resin injection molded rotary member (X) including a thickness defined between outer and inner surfaces in one of radially outward directions from the central rotation axis (Z), the thickness of the resin injection molded rotary member (X) being configured so that a thickness of the intermediate portion (41 c) is smallest at a position adjacent to the first shaft support portion (41 a) or the second shaft support portion (41 b).

2. The resin injection molded rotary member (X) according to Claim 1, wherein the intermediate portion (41 c) includes a noncontact portion (42) not being in contact with the shaft member (Y) in a state where the shaft member (Y) is inserted in the insertion hole (40).

3. The resin injection molded rotary member (X) according to Claim 1 or 2, wherein a portion in which the thickness of the intermediate portion (41c) is largest is arranged at any position other than ends of the intermediate portion (41 c) in the direction of the central rotation axis (Z).

4. The resin injection molded rotary member (X) according to any one of Claims 1 to 3, further comprising
a rotor portion (10) for a motor;
an impeller portion (20) integrally rotating with the rotor portion (10); and
a shaft portion (30) connecting the rotor portion (10) to the impeller portion (20), wherein at least the shaft portion (30) is configured to include the intermediate portion (41 c).
